# EUROPÄISCHE PATENTSCHRIFT

(11) **EP 0 497 938 B1**
(45) Veröffentlichungstag und Bekanntmachung des Hinweises auf die Patenterteilung: **21.12.1994**
(21) Anmeldenummer: 91914120.0
(22) Anmeldetag: 08.08.1991
(51) Int. Cl.: B60T 8/00

(54) **Verfahren zum Betrieb eines Fahrzeugs**
Method of operating a vehicle
Méthode d'opération d'une véhicule

(30) Priorität: 23.08.1990 DE 4026627
(43) Veröffentlichungstag der Anmeldung: 12.08.1992
(73) Patentinhaber: ROBERT BOSCH GMBH, 70442 Stuttgart (DE)
(72) Erfinder: VAN ZANTEN, Anton, D-7257 Ditzingen 4 (DE)
(86) Internationale Anmeldenummer: EP9101500
(87) Internationale Veröffentlichungsnummer: WO9203315

(56) Entgegenhaltungen:
- EP-A- 0 325 298
- WO-A-89/03331
- WO-A-89/11409
- WO-A-90/05646
- DE-A- 3 518 221

## Beschreibung

### Stand der Technik

Ein Fahrzeug wird neutralsteuernd genannt, wenn der Schräglaufwinkel an den Vorderrädern αᵥ gleich groß ist wie αₕ an den Hinterrädern. Im Gegensatz dazu wird ein Fahrzeug übersteuernd genannt, wenn αₕ > αᵥ ist - und untersteuernd genannt, wenn αₕ < αᵥ ist.

Nun gilt im allgemeinen, daß ein neutrales Fahrzeugverhalten erstrebenswert ist, da es als angenehm für den Fahrer empfunden wird. Da jedoch ein untersteuerndes Fahrzeug vom Fahrer leichter beherrschbar ist als ein übersteuerndes Fahrzeug, wird die Grundabstimmung des Fahrzeugs meist leicht untersteuernd gewählt.

Durch Fahrzeugverzögerungen oder Fahrzeugsbeschleunigungen während der Fahrt tritt eine Achslastverlagerung gegenüber der stationären Fahrt auf. Durch diese Achslastverlagerungen ändern sich die Schräglaufwinkel, und es geht die Grundabstimmung verloren: Das Fahrzeug wird im allgemeinen übersteuernd.

Aus der WO 90/06251 ist ein Verfahren zur Erhöhung der Beherrschbarkeit eines zweiachsigen Fahrzeugs beschrieben, bei dem die Bremsdrücke an den Fahrzeugrädern nach Maßgabe der augenblicklichen Schlupfwerte im Vergleich zu Schlupfsollwerten variiert werden. Zusätzlich werden dort noch die Schräglaufwinkel eines Rads jeder Achse ermittelt, und es werden die erwähnten Schlupfsollwerte in Abhängigkeit von diesen Schräglaufwinkeln im Sinne einer besseren Beherrschbarkeit des Fahrzeugs variiert.

### Vorteile der Erfindung

Es ist erstrebenswert, bei Bremsungen und/oder bei Antrieb des Fahrzeugs eine Regelung der Schräglaufwinkel an den Achsen derart vorzunehmen, daß das Fahrzeug unter allen Betriebsbedingungen neutral bis leicht untersteuernd bleibt. Es werden in den Patentansprüchen 1 und 3 zwei einfach realisierbare Verfahren zur Gewinnung von Informationen beschrieben, die ein Maß für die Schräglaufwinkel darstellen.

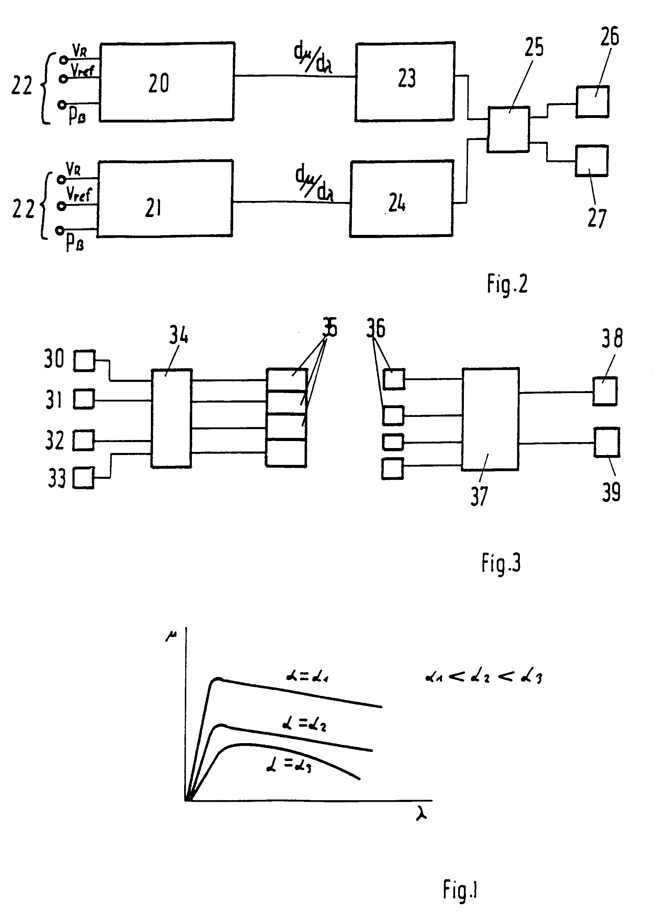

Beim einen Verfahren wird davon ausgegangen, daß zwischen dem Reifenschlupf λ und dem Kraftschlußbeiwert µ ein nichtlinearer Zusammenhang besteht, der "µ-Schlupfkurve" genannt wird. Einige µ-Schlupfkurven zeigt Figur 1.

Die Steigung der Schlupfkurve für kleine λ-Werte ist positiv. Es ist bekannt, daß die Steigung bei λ = 0 hauptsächlich vom Reifenmaterial und Reifenbau abhängt. Bei weichem Gummi und bei hohen Profilstollen ist die Steigung geringer als bei hartem Gummi und bei kurzen Profilstollen.

Ein weiterer wichtiger Einfluß auf die Steigung der Schlupfkurve bei λ = 0 hat der Schräglaufwinkel (siehe Figur 1). Mit zunehmendem Schräglaufwinkel nimmt die Steigung der Schlupfkurve bei λ = 0 ab.

Es wird nun vorgeschlagen, die Steigung der µ-Schlupfkurve bei λ = 0 als Maß für den Schräglaufwinkel zu nehmen und die Brems- und Antriebsmomente so zu regeln, daß die Steigung an den Vorderrädern etwas kleiner als an den Hinterrädern ist und somit das Fahrzeug leicht untersteuernd ist.

Im allgemeinen wird bei gleicher Steigung der Schlupfkurven bei λ = 0 an den Vorder- und Hinterrädern αᵥ nicht gleich αₕ sein. Man muß vielmehr den Zusammenhang zwischen der Steigung der µ-Schlupfkurve bei λ = 0 und den Schräglaufwinkel empirisch ermitteln. Diese Aufzeichnungen können dann als Kalibrierkurven in der Regelung der Steigungen benutzt werden.

Die Steigung der µ-Schlupfkurve kann durch Identifikation gewonnen werden, wie dies z. B. in der DE-OS 3 734 878 beschrieben ist.

Man kann gemäß Anspruch 3 ein Maß für die Steigung auch dadurch gewinnen, daß man jedes Rad mit einem Bremsmoment, das proportional zur Aufstandskraft auf dem Rad ist, abbremst. Dann ist das µ an allen Rädern gleich groß. Nun werden die Radgeschwindigkeiten gemessen. Wenn an einem Rad der Schlupf kleiner ist als an einem anderen, dann ist die Steigung der µ-Schlupfkurve an dem einen Rad größer als an dem anderen usw.

Auf diese Weise können durch direkte Vergleiche der Schlupfwerte die Steigungen der Schlupfkurven an den Rädern und damit die Schräglaufwinkel an den Rädern verglichen werden und daraus resultierend die Einregelung auf das Sollverhältnis vorgenommen werden.

### Figurenbeschreibung

Anhand der Zeichnung sollen Ausführungsbeispiele der Erfindung erläutert werden
Es zeigen:
- Fig. 1: µ-Schlupfkurven bei unterschiedlichen Schräglaufwinkeln
- Fig. 2: ein Blockschaltbild eines möglichen Ausführungsbeispiels
- Fig. 3: ein Blockschaltbild eines anderen Ausführungsbeispiels

In Fig. 1 sind µ-Schlupfkurven bei unterschiedlichen Schräglaufwinkel gezeigt. Man erkennt, daß die Steigung der Kurven bei λ = 0 mit steigendem Schräglaufwinkel abnimmt.

In Fig. 2 sind mit 20 und 21 zwei Identifikationsblöcke für je eines der Räder einer Achse bezeichnet. Gemäß der in der DE-OS 3618691 beschriebenen Lehre kann jeder dieser Blöcke aus den über die Klemmen 22 zugeführten Größen Radgeschwindigkeiten V_{R}, Fahrzeuggeschwindigkeit V_{F} oder der Fahrzeuggeschwindigkeit angenäherte Referenzgeschwindigkeit V_{ref} und eingesteuerter Bremsdruck, der auch errechnet sein kann, durch Identifikation die Steigung der µ-Schlupfkurve dµ/dλ abschätzen. In Blöcken 23 und 24 wird der Wert dµ/dλ auf den Schlupf λ = 0 bezogen.

Die beiden ein Maß für die Steigung der µ-Schlupfkurve bei λ = 0 darstellenden Werte dµ/dλ werden dann in einem Komparator 25 verglichen. In Abhängigkeit von dem Verhältnis dieser Größen erfolgt dann eine Ansteuerung von Blöcken 26 und 27, die das Motormoment und/oder das Bremsmoment an den Achsen im Sinne einer Annäherung an das Sollverhältniss beinflussen. Hierdurch werden dann auch die Schräglaufwinkel auf ein gewünschtes Verhältnis verändert.

In Fig. 3 sind zur Ermittlung der Aufstandskräfte der Räder vier Sensoren 30-33 (z.B. für die Einfederwege) vorgesehen, die entsprechende Signale an eine Bremsdruckeinsteuerelektronik 34 liefern. Diese steuert über den einzelnen Bremsen zugeordnete Ventile 35 einen der Aufstandskraft des einzelnen Rads proportionales Bremsmoment an den Rädern ein. Geschwindigkeitssensoren 36 messen nun die Radgeschwindigkeiten und es werden die Schlurfwerte berechnet, die ein Maß für die Steigung der jeweiligen µ-Schlupfkurve und damit auch der Schräglaufwinkel sind.

## Patentansprüche

1. Verfahren zum Betrieb eines Fahrzeuges mit wenigstens zwei Achsen, bei dem die Schräglaufwinkel an den Achsen ermittelt werden und zur Regelung ausgenutzt werden., dadurch gekennzeichnet, daß die Schräglaufwinkel aus der Steigung der µ-Schlupfkurve bei einem Schlupfwert λ nahe 0 ermittelt wird und daß diese Schräglaufwinkel durch Beeinflussung der Radmomentenverteilung im Sinne des Einhaltens eines Sollverhältnisses der Schräglaufwinkel der Achsen variiert werden.

2. Verfahren nach Anspruch 1, dadurch gekennzeichnet, daß die Steigung der µ-Schlupfkurve durch Identifikation gewonnen wird.

3. Verfahren zum Antrieb eines Fahrzeuges mit wengistens zwei Achsen, bei dem die Schräglaufwinkel an den Achsen ermittelt werden und zur Regelung ausgenutzt werden, dadurch gekennzeichnet, daß an den Rädern ein zur Aufstandskraft jedes Rades proportionales Bremsmoment eingesteuert wird, daß die sich einstellenden Radschlupfwerte als Maß für den Schräglaufwinkel dienen und daß diese Schräglaufwinkel durch Beeinflussung der Radmomentenverteilung im Sinne des Einhaltens eines Sollverhältnisses der Schräglaufwinkel der Achsen variiert werden.

4. Verfahren nach einem der Ansprüche 1 bis 3, dadurch gekennzeichnet, daß das Sollverhältnis derart gewählt wird, daß der Schräglaufwinkel der Hinterachse etwas kleiner als der der Vorderachse ist.

## Claims

1. Method for operating a vehicle with at least two axles, in which the slip angles at the axles are determined and used for the purpose of control, characterized in that the slip angles is [sic] determined from the slope of the µ-slip curve at a slip value λ close to 0 and in that these slip angles are varied by influencing the wheel torque distribution in order to maintain a desired ratio of the slip angles of the axles.

2. Method according to Claim 1, characterized in that the slope of the µ-slip curve is obtained by identification.

3. Method for driving a vehicle with at least two axles, in which the slip angles at the axles are determined and used for the purpose of control, characterized in that a braking torque proportional to the normal force of each wheel is fed in at the wheels, in that the wheel-slip values which arise serve as a measure of the slip angle and in that these slip angles are varied by influencing the wheel torque distribution in order to maintain a desired ratio of the slip angles of the axles.

4. Method according to one of Claims 1 to 3, characterized in that the desired ratio is chosen in such a way that the slip angle at the rear axle is somewhat smaller than that at the front axle.

## Revendications

1. Procédé pour faire fonctionner un véhicule avec au moins deux essieux, dans le cas duquel on détecte sur les essieux les angles de pincement et on les utilise pour la régulation, procédé caractérisé en ce que les angles de pincement sont détectés à partir de la pente de la courbe de glissement µ dans le cas d'une valeur de glissement λ proche de zéro et en ce que l'on fait varier ces angles de pincement en influençant la répartition du couple de roue dans le sens du maintien d'un rapport de consigne des angles de glissement des essieux.

2. Procédé selon la revendication 1, caractérisé en ce que la pente de la courbe de glissement µ est obtenue par identification.

3. Procédé pour entraîner un véhicule avec au moins deux essieux, dans le cas duquel on détecte les angles de pincement sur les essieux et on les utilise pour la régulation procédé caractérisé en ce que sur les roues on commande un couple de freinage proportionnel à la force de contact de chaque roue sur le sol, en ce que les valeurs de glissement de roue qui s'établissent servent de mesure de l'angle de glissement et en ce que l'on fait varier ces angles de glissement en influençant la répartition des couples de roues dans le sens du maintien d'un rapport de consigne des angles de pincement des essieux.

4. Procédé selon l'une des revendications 1 à 3, caractérisé en ce que le rapport de consigne est choisi de telle façon que l'angle de pincement de l'essieu arrière soit un peu plus petit que celui de l'essieu avant.
